# EUROPÄISCHE PATENTSCHRIFT

(11) **EP 2 999 901 B1**
(45) Veröffentlichungstag und Bekanntmachung des Hinweises auf die Patenterteilung: **26.04.2017**
(21) Anmeldenummer: 14725014.6
(22) Anmeldetag: 19.05.2014
(51) Int. Cl.: F16H 61/12, F16H 61/30

(54) **VERFAHREN ZUM BETREIBEN EINER GETRIEBEEINRICHTUNG SOWIE ENTSPRECHENDE GETRIEBEEINRICHTUNG**
METHOD FOR OPERATING A TRANSMISSION DEVICE AND CORRESPONDING TRANSMISSION DEVICE
PROCÉDÉ POUR FAIRE FONCTIONNER UNE BOÎTE DE VITESSES AINSI QUE BOÎTE DE VITESSES CORRESPONDANTE

(30) Priorität: 22.05.2013 DE 102013008701
(43) Veröffentlichungstag der Anmeldung: 30.03.2016
(73) Patentinhaber: Audi AG, 85045 Ingolstadt (DE)
(72) Erfinder: BARTL, Florian, 86673 Bergheim (DE)
(74) Vertreter: Lehle, Josef
(86) Internationale Anmeldenummer: PCT/EP2014/001342
(87) Internationale Veröffentlichungsnummer: WO 2014/187553

(56) Entgegenhaltungen:
- DE-A1- 3 940 590
- DE-A1-102006 016 412
- DE-A1-102011 100 800

## Beschreibung

Die Erfindung betrifft ein Verfahren zum Betreiben einer Getriebeeinrichtung, insbesondere einer Doppelkupplungsgetriebeeinrichtung, wobei die Getriebeeinrichtung mehrere Gangsteller mit jeweils einem Gangstellerventil und einem mit einer Schaltgabel der Getriebeeinrichtung wirkverbundenen Gangstellerkolben aufweist, der in einem Gangstellerzylinder angeordnet ist und diesen in eine erste Druckkammer und eine zweite Druckkammer unterteilt, wobei in einer ersten Schaltstellung des Gangstellerventils die erste Druckkammer, in einer zweiten Schaltstellung die zweite Druckkammer und in einer Neutralstellung keine der Druckkammern mit einer gemeinsamen Zuleitung strömungsverbunden ist, und wobei eine Strömungsverbindung der Zuleitung zu einer gemeinsamen Druckquelle in einer ersten Betriebsstellung eines Schaltventils freigegeben und in einer zweiten Betriebsstellung des Schaltventils unterbrochen ist. Die Erfindung betrifft weiterhin eine Getriebeeinrichtung. Ein solches Verfahren und eine solche Einrichtung sind aus der gattungsbildenden Patentschrift DE 10 2011 100 800 bekannt.

Die Getriebeeinrichtung ist beispielsweise einem Kraftfahrzeug zugeordnet und liegt mithin in einer Wirkverbindung zwischen einer Antriebseinrichtung des Kraftfahrzeugs und wenigstens einem Rad beziehungsweise einer Radachse des Kraftfahrzeugs vor. Die Antriebseinrichtung weist zumindest ein Antriebsaggregat, beispielsweise eine Brennkraftmaschine oder einen Elektromotor, auf. Die Antriebseinrichtung kann jedoch auch als Hybridantriebseinrichtung ausgeführt sein und insoweit mindestens zwei unterschiedliche Antriebsaggregate aufweisen, beispielsweise eine Brennkraftmaschine und einen Elektromotor. Die Getriebeeinrichtung dient dem Einstellen einer aus mehreren vorgegebenen Übersetzungen ausgewählten Übersetzung, welche insbesondere nachfolgend in der vorstehend erwähnten Wirkverbindung vorliegt. Die Getriebeeinrichtung ist beispielsweise als Doppelkupplungsgetriebeeinrichtung ausgeführt.

Während des Betriebs von bekannten Getriebeeinrichtung werden zahlreiche Ventile permanent bestromt, um sie in die gewünschte Stellung zu bewegen beziehungsweise in dieser zu halten. Dies führt jedoch zu einem hohen Stromverbrauch.

Es ist daher Aufgabe der Erfindung, ein Verfahren zum Betreiben einer Getriebeeinrichtung vorzuschlagen, welches dienen Nachteil nicht aufweist, sondern insbesondere bei weiterhin zuverlässigem Betrieb der Getriebeeinrichtung eine deutliche Reduzierung des Stromverbrauchs ermöglicht.

Dies wird erfindungsgemäß mit einem Verfahren mit den Merkmalen des Anspruchs 1 erreicht. Dabei ist vorgesehen, dass für ein Wechseln aus einer Bereitschaftsbetriebsart in eine Stromsparbetriebsart ein Drucktest durchgeführt wird, bei dem die Gangstellerventile der Gangsteller zum Einstellen der Neutralstellung sowie das Schaltventil zum Einstellen der zweiten Betriebsstellung angesteuert werden und anschließend das Gangstellerventil wenigstens eines der Gangsteller zum Einstellen einer der Schaltstellungen angesteuert wird, wobei die Position des Gangstellerkolbens des entsprechenden Gangstellers mittels einer Erfassungseinrichtung über einen bestimmten Zeitraum ermittelt und bei einer Veränderung der Position während des Zeitraums auf einen Fehler des Schaltventils erkannt wird.

Zum Einstellen der gewünschten Übersetzung weist die Getriebeeinrichtung mehrere Gangsteller auf. Jeder dieser Gangsteller verfügt über ein Gangstellerventil und einen Ganstellerkolben, der mit einer ihm zugeordneten Schaltgabel der Getriebeeinrichtung wirkverbunden ist. Der Gangstellerkolben ist in einem Gangstellerzylinder angeordnet und teilt diesen in die erste Druckkammer und die zweite Druckkammer auf. Das Gangstellerventil kann nun in drei unterschiedliche Schaltstellungen gebracht werden, nämlich in die erste Schaltstellung, die zweite Schaltstellung und die Neutralstellung. In der ersten Schaltstellung ist die erste Kammer mit der gemeinsamen Zuleitung der mehreren Gangsteller strömungsverbunden. In der zweiten Schaltstellung trifft dies für die zweite Kammer zu. In der Neutralstellung ist dagegen die Strömungsverbindung zwischen beiden Kammern und der gemeinsamen Zuleitung unterbrochen.

Bevorzugt ist es vorgesehen, dass, während eine der beiden Kammern mit der gemeinsamen Zuleitung strömungsverbunden ist, die Strömungsverbindung zwischen der jeweils anderen Kammer und der Zuleitung unterbrochen ist. Insbesondere ist die jeweils andere Kammer mit einem Ablauf strömungsverbunden, in welchem ein geringerer Druck vorliegt als in der gemeinsamen Zuleitung. Entsprechend wird - sofern in der gemeinsamen Zuleitung ein ausreichend hoher Druck vorliegt - der Gangstellerkolben in dem Gangstellerzylinder in diejenige Richtung verlagert wird, die der mit der Zuleitung strömungsverbundenen Kammer abgewandt ist. In der ersten Schaltstellung wird also der Gangstellerkolben in dem Gangstellerzylinder in Richtung der zweiten Kammer und in der zweiten Schaltstellung in Richtung der ersten Kammer verlagert. In der Neutralstellung soll dagegen der Gangstellerkolben im Wesentlichen ortsfest sein.

Zu diesem Zweck werden entweder die beiden Druckkammern strömungstechnisch verschlossen oder alternativ miteinander in Strömungsverbindung gesetzt, sodass in beiden Druckkammern derselbe Druck vorliegt. Bei einer Verlagerung des Gangstellerkolbens wird gleichzeitig die mit ihm wirkverbundene Schaltgabel entsprechend verlagert. Die Schaltgabel dient beispielsweise dazu, eine Schaltmuffe der Getriebeeinrichtung derart anzuordnen, dass der gewünschte Gang eingelegt beziehungsweise die gewünschte Übersetzung eingestellt ist. Bevorzugt sind jeder Schaltgabel und mithin jedem Gangsteller zwei Gänge beziehungsweise Übersetzungen der Getriebeeinrichtung zugeordnet.

Insoweit kann der Gangstellerkolben bevorzugt in drei Stellungen angeordnet werden, nämlich einer Freilaufstellung, einer ersten Auswahlstellung und einer zweiten Auswahlstellung. In der Freilaufstellung ist der Gangstellerkolben und mithin die Schaltkabel derart angeordnet, dass mithilfe des jeweiligen Gangstellers kein Gang eingelegt ist. In der ersten Auswahlstellung ist dagegen ein bestimmter Gang und in der zweiten Auswahlstellung ein von diesem Gang verschiedener anderer Gang mithilfe dieses Gangstellers eingelegt. Beispielsweise liegt die Freilaufstellung vor, wenn der Gangstellerkolben in einer Zwischenstellung in den Gangstellerzylinder angeordnet ist, aus welcher er sowohl in Richtung der ersten Kammer als auch in Richtung der zweiten Kammer verlagerbar ist.

Die Getriebeeinrichtung verfügt über eine gemeinsame Druckquelle, mittels welcher die gemeinsame Zuleitung und mithin die mehreren Gangsteller mit Druck beaufschlagbar sind. In der Strömungsverbindung zwischen der gemeinsamen Zuleitung und der gemeinsamen Druckquelle ist das Schaltventil vorgesehen. Dieses gibt die Strömungsverbindung in seiner ersten Betriebsstellung frei und verschließt sie in seiner zweiten Betriebsstellung. Mithilfe des Schaltventils kann also die Strömungsverbindung zwischen der Druckquelle einerseits und der Zuleitung beziehungsweise dem Gangsteller andererseits unterbrochen werden.

Insgesamt ist es das Ziel der Erfindung, in der Stromsparbetriebsart möglichst viele der Ventile stromlos zu schalten, insbesondere die Gangstellerventile der Gangsteller und/oder das Schaltventil. Um ein zuverlässiges Betreiben der Getriebeeinrichtung sicherzustellen, ist es dabei jedoch notwendig, den Druck in der Zuleitung abzusenken beziehungsweise die Strömungsverbindung der Zuleitung zu der gemeinsamen Druckquelle zu unterbrechen. Dies ist insbesondere der Fall, weil die Gangstellerventile vorzugsweise derart ausgeführt sind, dass sie in stromlosem Zustand eine der Schaltstellungen einnehmen, sodass der Gangstellerkolben verlagert werden würde, sollte die Zuleitung noch mit der Druckquelle strömungsverbunden sein. Werden beispielsweise die Gangstellerventile aller Gangsteller stromlos geschaltet, während die Zuleitung noch mit der Druckquelle verbunden ist, also noch ein Druck in der Zuleitung vorliegt, welche für eine Verlagerung des Gangstellerkolbens ausreicht, so würden alle Gangstellerkolben in eine Auswahlstellung verlagert und folglich für jeden Gangsteller ein Gang an der Getriebeeinrichtung eingelegt werden. Dies würde jedoch zu einem Blockieren der Getriebeeinrichtung und im Extremfall zu einer Beschädigung führen. Dies soll jedoch verhindert werden.

Aus diesem Grund wird der Drucktest durchgeführt, bevor aus der Bereitschaftsbetriebsart in die Stromsparbetriebsart gewechselt wird. In der Bereitschaftsbetriebsart sind beispielsweise die Gangstellerventile aller Gangstelle derart angesteuert, dass sie in ihrer jeweiligen Neutralstellung vorliegen. Gleichzeitig ist das Schaltventil zum Einstellen der ersten Betriebsstellung angesteuert, sodass die Zuleitung mit der gemeinsamen Druckquelle strömungsverbunden ist. Befindet sich die Getriebeeinrichtung in der Bereitschaftsbetriebsart, so kann also rasch und unverzüglich ein Gangwechsel erfolgen, indem der entsprechende Gangsteller beziehungsweise die entsprechenden Gangsteller angesteuert werden. In der Stromsparbetriebsart sollen dagegen auf die vorstehend beschriebene Art und Weise möglichst viele der Ventile stromlos geschaltet sein. Insbesondere ist dies für die Gangstellerventile aller Gangsteller sowie das Schaltventil vorgesehen.

Zum Durchführen des Drucktests werden zunächst die Gangstellerventile der Gangsteller, insbesondere aller Gangsteller, derart bestromt beziehungsweise angesteuert, dass die jeweilige Neutralstellung eingestellt ist. Gleichzeitig wird das Schaltventil zum Einstellen der zweiten Betriebsstellung angesteuert. Dabei ist zunächst nicht bekannt, ob das Schaltventil die zweite Betriebsstellung, in welcher die Strömungsverbindung zwischen der Zuleitung und der Druckquelle unterbrochen ist, tatsächlich erfolgreich erreicht hat. Beispielsweise kann es vorkommen, dass zwar das Schaltventil zum Einstellen der zweiten Betriebsstellung angesteuert wird, diese jedoch nicht erreicht wird, weil beispielsweise Schmutzpartikel in dem Schaltventil vorliegen und/oder das Schaltventil in der ersten Betriebsstellung hängt. In diesem Fall liegt auch nach dem Ansteuern des Schaltventils zum Einstellen seiner zweiten Betriebsstellung die Strömungsverbindung vor. Dies wird jedoch im Rahmen des Drucktests im Folgenden festgestellt.

Zu diesem Zweck wird das Gangstellerventil wenigstens eines der Gangsteller derart angesteuert, dass eine der Schaltstellungen angesteuert wird. Weil den Gangstellerkolben der Gangsteller jeweils eine Erfassungseinrichtung beziehungsweise eine Wegerfassungseinrichtung zugeordnet ist, kann die Position des entsprechenden Gangstellerkolbens mithilfe dieser Erfassungseinrichtung über den bestimmten Zeitraum hinweg ermittelt werden. Wird innerhalb dieses Zeitraums eine Veränderung der Position des Gangstellerkolbens festgestellt, so kann darauf geschlossen werden, dass die Zuleitung weiterhin mit der Druckquelle strömungsverbunden ist, in der Zuleitung also ein Druck vorliegt, welcher zum Verlagern des jeweiligen Gangstellerkolbens ausreicht. In diesem Fall wird auf einen Fehler des Schaltventils erkannt und bevorzugt nicht aus der Bereitschaftsbetriebsart in die Stromsparbetriebsart gewechselt. Beispielsweise wird bei einem Erkennen auf den Fehler des Schaltventils ein Notlaufbetrieb der Getriebeeinrichtung eingeleitet.

Eine weitere Ausgestaltung der Erfindung sieht vor, dass die Gangstellerventile ständig mit einer in Richtung einer der Schaltstellungen gerichteten Rückstellkraft beaufschlagt werden und/oder dass das Schaltventil ständig mit einer in Richtung der zweiten Betriebsstellung gerichteten Rückstellkraft beaufschlagt wird. Die Rückstellkraft wird beispielsweise mithilfe einer Feder erzielt, sodass sie insoweit auch als Federkraft bezeichnet werden kann. Die Rückstellkraft wirkt permanent beziehungsweise ständig auf das jeweilige Ventil. Sie ist darauf gerichtet, das Ventil in eine der Schaltstellungen, also entweder in die erste Schaltstellung oder die zweite Schaltstellung, beziehungsweise die zweite Betriebsstellung zu drängen. Bei einem Ansteuern des jeweiligen Ventils wird, beispielsweise mithilfe einer Magneteinrichtung, eine Stellkraft erzeugt, welche zum Einstellen der gewünschten Stellung des jeweiligen Ventils dient, und dabei üblicherweise der Rückstellkraft entgegenwirkt. Beispielsweise muss, um das Gangstellerventil in seiner Neutralstellung zu halten, permanent eine Stellkraft erzeugt werden, welche ebenso groß ist wie die ihr entgegengerichtete Rückstellkraft.

Eine Weiterbildung der Erfindung sieht vor, dass ein Wechseln aus der Bereitschaftsbetriebsart in die Stromsparbetriebsart eingeleitet wird, wenn die Gangstellerventile über einen bestimmten Zeitraum in ihrer Neutralstellung vorliegen. In der Neutralstellung der Gangstellerventile erfolgt kein Wechseln des eingelegten Gangs an der Getriebeeinrichtung. Liegen also die Gangstellerventile über den bestimmten Zeitraum in der Neutralstellung vor, so kann davon ausgegangen werden, dass auch weiterhin zumindest für eine bestimmte Zeit kein Gangwechsel vorgenommen werden soll. Um Energie zu sparen kann also in die Stromsparbetriebsart gewechselt werden. Folglich wird der Wechsel eingeleitet, wobei vor dem tatsächlichen Wechsel zunächst der eingangs erläuterte Drucktest durchgeführt wird. Nur wenn der Drucktest erfolgreich ist, also nicht auf einen Fehler des Schaltventils erkannt wird, wird tatsächlich aus der Bereitschaftsbetriebsart in die Stromsparbetriebsart gewechselt. Wird dagegen auf den Fehler erkannt, so wird beispielsweise ein Notlaufbetrieb eingeleitet.

Eine bevorzugte Ausgestaltung der Erfindung sieht vor, dass zum Ansteuern des Gangstellerventils wenigstens eines der Gangsteller zum Einstellen einer der Schaltstellungen das Gangstellerventil stromlos geschaltet wird. Das im Rahmen des Drucktests erfolgende Ansteuern des Gangstellerventils erfolgt also derart, dass es stromlos geschaltet wird, sodass insbesondere die vorstehend beschriebene Rückstellkraft eine Verlagerung in die entsprechende der Schaltstellungen bewirken kann. Erfolgt daraufhin eine Verlagerung des Gangstellerkolbens und wird diese mittels der Erfassungseinrichtung innerhalb des bestimmten Zeitraums erfasst, so wird auf den Fehler des Schaltventils erkannt.

Eine weitere Ausgestaltung der Erfindung sieht vor, dass aus der Bereitschaftsbetriebsart in die Stromsparbetriebsart gewechselt wird, wenn während des Zeitraums keine Veränderung der Position festgestellt wird. Dies wurde bereits vorstehend erläutert. Selbstredend kann nur dann in die Stromsparbetriebsart gewechselt werden, also möglichst viele der Ventile, insbesondere alle Ventile, stromlos geschaltet werden, wenn die Strömungsverbindung zwischen der Zuleitung und der Druckquelle erfolgreich unterbrochen wurde, um ein Blockieren der Getriebeeinrichtung beziehungsweise eine Beschädigung zu vermeiden.

Bevorzugt kann es vorgesehen sein, dass für ein Wechseln aus der Stromsparbetriebsart in die Bereitschaftsbetriebsart die Gangstellerventile zum Einstellen der Neutralstellung angesteuert werden und nach einer bestimmten Wartezeit das Schaltventil zum Einstellen der ersten Betriebsstellung angesteuert wird. Wurde also nach einem erfolgreichen Drucktest, bei welchem nicht auf den Fehler des Schaltventils erkannt wurde, aus der Bereitschaftsbetriebsart in die Stromsparbetriebsart gewechselt, und soll nun ein Gangwechsel vorgenommen werden, so muss zunächst wieder aus der Stromsparbetriebsart in die Bereitschaftsbetriebsart gewechselt werden. Dazu werden zunächst die Gangstellerventile derart angesteuert, dass sie ihre Neutralstellung einnehmen. Wie bereits vorstehend beschrieben, ist in dieser Neutralstellung keine der Druckkammern mit der gemeinsamen Zuleitung strömungsverbunden. Nach dem Ansteuern wird zunächst die bestimmte Wartezeit gewartet, um sicherzustellen, dass die Gangstellerventile ihre Neutralstellung erreicht haben. Anschließend kann das Schaltventil zum Einstellen der ersten Betriebsstellung und mithin dem Herstellen der Strömungsverbindung zwischen der Druckquelle und der gemeinsamen Zuleitung angesteuert werden. Nachfolgend liegt also in der Zuleitung ein Druck vor, welcher ausreicht, um den Gangstellerkolben in den Gangsteller zu verlagern und einen Gangwechsel vorzunehmen.

Eine besonders bevorzugte Ausgestaltung der Erfindung sieht vor, dass den Gangstellerkolben jeweils eine Haltevorrichtung zugeordnet ist, die den entsprechenden Gangstellerkolben mit einer bestimmten Haltekraft in seine momentane Stellung drängt. Die Haltevorrichtung ist beispielsweise eine Rastvorrichtung, welche Raststellungen definiert, die den Stellungen des Gangstellerventils, also der Neutralstellung und den beiden Schaltstellungen, zugeordnet sind. Der Gangstellerkolben wird von der Haltevorrichtung beziehungsweise Rastvorrichtung in seiner momentan vorliegenden Stellung, also der Freilaufstellung, der ersten Auswahlstellung oder der zweiten Auswahlstellung, gehalten. Diese Haltekraft muss überwunden werden, um den Gangstellerkolben innerhalb des Gangstellerzylinders zwischen seinen verschiedenen Stellungen zu verlagern. Für dieses Überwinden ist ein entsprechender Druck in der Zuleitung notwendig. Mithilfe der Haltevorrichtung wird sichergestellt, dass in der Neutralstellung des entsprechenden Gangstellerventils, auch bei einem (geringen) Druckunterschied zwischen der ersten Druckkammer und der zweiten Druckkammer keine Verlagerung des Gangstellerkolbens und mithin ein Gangwechsel erfolgt.

Eine Weiterbildung der Erfindung sieht vor, dass während des Drucktests das Gangstellerventil desjenigen Gangstellers zum Einstellen einer der Schaltstellungen angesteuert wird, der nicht dem momentanen Fahrgang zugeordnet ist. Der momentane Fahrgang ist derjenige Gang, mittels welchem die momentan vorliegende Übersetzung der Getriebeeinrichtung bereitgestellt wird, insbesondere in der Wirkverbindung zwischen der Antriebseinrichtung und dem wenigstens einen Rad des Kraftfahrzeugs. Zum Durchführen des Drucktests wird der dabei verwendete Gangsteller derart ausgewählt, dass der momentane Fahrgang nicht ausgelegt beziehungsweise gewechselt wird. Der Gangsteller soll also nicht dem momentanen Fahrgang zugeordnet sein.

Schließlich kann vorgesehen sein, dass das Doppelkupplungsgetriebe über zwei Getriebestränge verfügt, welchen jeweils eine Kupplung zugeordnet ist, wobei die Kupplung des Getriebestrangs, welchem der momentane Vorgang nicht zugeordnet ist, geöffnet wird, und wobei während des Drucktests das Gangstellerventil wenigstens eines diesem Getriebestrang zugeordneten Gangstellers zum Einstellen einer der Schaltstellungen angesteuert wird. Die Getriebeeinrichtung soll als Doppelkupplungsgetriebeeinrichtung ausgeführt sein. Sie verfügt insoweit über zwei Getriebestränge, wobei jeder dieser Getriebestränge über eine eigene Kupplung verfügt, mittels welcher eine Wirkverbindung zu einer Abtriebswelle der Getriebeeinrichtung beziehungsweise dem wenigstens einen Rad des Kraftfahrzeugs herstellbar ist.

Während eines Betriebs der Getriebeeinrichtung ist stets ein Fahrgang eingelegt, soweit nicht ein Leerlaufbetrieb ausgewählt ist. Zum Übertragen eines von der Antriebseinrichtung bereitgestellten Drehmoments zu dem wenigstens einen Rad des Kraftfahrzeugs ist diejenige Kupplung des Getriebestrangs geschlossen, welchem der momentan eingelegte Fahrgang zugeordnet ist. Die Kupplung des jeweils anderen Getriebestrangs ist dagegen geöffnet. Das bedeutet jedoch, dass in diesem jeweils anderen Getriebestrang ein beliebiger Gang eingelegt werden kann, ohne dass es zu einem Blockieren der Getriebeeinrichtung kommt. Insoweit wird zum Durchführen des Drucktests ein Gangstellerventil angesteuert, welches dem Getriebestrang zugeordnet ist, der den momentanen Fahrgang nicht aufweist.

Die Erfindung betrifft weiterhin eine Getriebeeinrichtung, insbesondere zur Durchführung des vorstehend beschriebenen Verfahrens, die mehrere Gangsteller mit jeweils einem Gangstellerventil und einem mit einer Schaltgabel der Getriebeeinrichtung wirkverbundenen Gangstellerkolben aufweist, der in einem Gangstellerzylinder angeordnet ist und diesen in eine erste Druckkammer und eine zweite Druckkammer aufteilt, wobei in einer ersten Schaltstellung des Gangstellerventils die erste Druckkammer, in einer zweiten Schaltstellung die zweite Druckkammer und in einer Neutralstellung keine der Druckkammern mit einer gemeinsamen Zuleitung strömungsverbunden ist, und wobei eine Strömungsverbindung der Zuleitung zu einer gemeinsamen Druckquelle in einer ersten Betriebsstellung eines Schaltventils freigegeben und in einer zweiten Betriebsstellung des Schaltventils unterbrochen ist.

Dabei ist vorgesehen, dass die Getriebeeinrichtung dazu ausgebildet ist, für ein Wechseln aus einer Bereitschaftsbetriebsart in eine Stromsparbetriebsart einen Drucktest durchzuführen, bei dem die Gangstellerventile der Gangsteller zum Einstellen der Neutralstellung sowie das Schaltventil zum Einstellen der zweiten Betriebsstellung angesteuert werden und anschließend das Gangstellerventil wenigstens eines der Gangsteller zum Einstellen einer der Schaltstellungen angesteuert wird, wobei die Position des Gangstellerkolbens des entsprechenden Gangstellers mittels einer Erfassungseinrichtung über einen bestimmten Zeitraum ermittelt und bei einer Veränderung der Position während des Zeitraums auf einen Fehler des Schaltventils erkannt wird. Auf die Vorteile einer derartigen Ausgestaltung der Getriebeeinrichtung beziehungsweise einer derartigen Vorgehensweise wurde bereits hingewiesen. Das Verfahren sowie die Getriebeeinrichtung können gemäß den vorstehenden Ausführungen weitergebildet sein, sodass insoweit auf diese verwiesen wird.

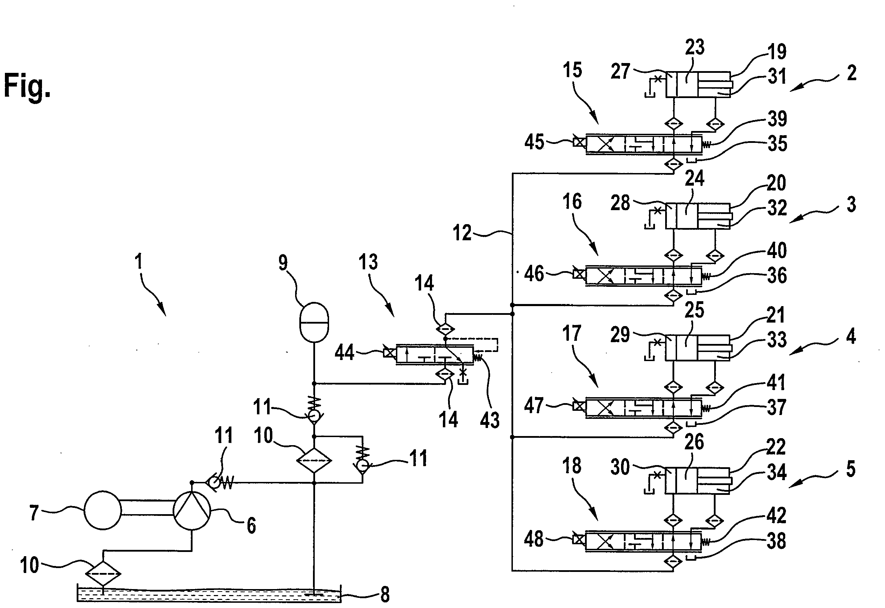

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Getriebeeinrichtung, insbesondere einer Doppelkupplungsgetriebeeinrichtung.

Die Figur zeigt eine schematische Darstellung einer Getriebeeinrichtung 1, die beispielsweise als Doppelkupplungsgetriebeeinrichtung ausgebildet ist. Die Getriebeeinrichtung 1 weist mehrere Gangsteller 2, 3, 4 und 5 auf, wobei grundsätzlich eine beliebige Anzahl an Gangstellern vorgesehen sein kann. Prinzipiell ist also auch eine Ausführungsform mit lediglich einem einzigen Gangsteller vorstellbar. Besonders bevorzugt sind jedoch wenigstens zwei Gangsteller vorgesehen. Den Gangstellern 2, 3, 4 und 5 ist eine gemeinsame Druckquelle 6, beispielsweise in Form einer Fördereinrichtung, zugeordnet. Die Fördereinrichtung wird beispielsweise mithilfe eines Elektromotors 7 angetrieben und dient dazu, aus einem Tank 8 ein Hydraulikfluid in Richtung der Gangsteller 2, 3, 4 und 5 zu fördern. Der Druckquelle 6 kann ein Drucktank 9 zugeordnet sein, in welchem unter Druck stehendes Hydraulikfluid vorgehalten werden kann, auch wenn die Druckquelle 6 kurzzeitig lediglich einen geringeren Druck bereitstellt. Zwischen der Druckquelle 6 und dem Tank 8 kann ein Filter 10 vorgesehen sein, ebenso in der Strömungsverbindung zwischen der Druckquelle 6 und dem Drucktank 9. In der Strömungsverbindung zwischen der Druckquelle 6 und dem Drucktank 9 kann ebenso wenigstens ein Rückschlagventil 11 vorliegen. Darauf soll jedoch in diesem Rahmen nicht näher eingegangen werden.

In der Strömungsverbindung zwischen der Druckquelle 6 beziehungsweise dem Drucktank 9 einerseits und einer gemeinsamen Zuleitung 12 der Gangsteller 2, 3, 4 und 5 ist ein Schaltventil 13 vorgesehen, welches wenigstens zwei Betriebsstellungen, nämlich eine erste Betriebsstellung und eine zweite Betriebsstellung, aufweist. In der ersten Betriebsstellung ist die Strömungsverbindung zwischen der gemeinsamen Druckquelle 6 beziehungsweise dem Drucktank 9 und der Zuleitung 12 freigegeben. In der zweiten Betriebsstellung des Schaltventils 13 ist sie dagegen unterbrochen. Dem Schaltventil 13 kann wenigstens ein Filter 14 zugeordnet sein.

An die gemeinsame Zuleitung 12 sind Gangstellerventile 15, 16, 17 und 18 der Gangsteller 2, 3, 4 und 5 angeschlossen. Die Gangstellerventile 15, 16, 17 und 18 liegen in einer Strömungsverbindung zwischen der Zuleitung 12 und einem Gangstellerzylinder 19, 20, 21 beziehungsweise 22 vor, in welchem jeweils ein Gangstellerkolben 23, 24, 25 beziehungsweise 26 verlagerbar angeordnet ist. Mit jedem der Gangstellerkolben 23, 24, 25 und 26 ist jeweils eine Schaltgabel der Getriebeeinrichtung 1 wirkverbunden, welche hier nicht näher dargestellt ist. Die Schaltgabel dient insbesondere dazu, eine Schaltmuffe der Getriebeeinrichtung 1 zum Einlegen eines bestimmten Gangs zu verlagern.

Jeder der Gangstellerkolben 23, 24, 25 und 26 kann bevorzugt in einer Freilaufstellung, einer ersten Auswahlstellung sowie einer zweiten Auswahlstellung angeordnet werden. In der Freilaufstellung ist die Schaltgabel derart angeordnet, dass keiner der dem jeweiligen Gangsteller 2, 3, 4 beziehungsweise 5 zugeordneten Gänge eingelegt ist. In der ersten Auswahlstellung ist dagegen ein erster Gang im Sinne einer ersten Übersetzung und in der zweiten Auswahlstellung ein zweiter Gang im Sinne einer zweiten Übersetzung eingelegt, wobei die beiden Übersetzungen bevorzugt voneinander verschieden sind.

Die Gangstellerkolben 23, 24, 25 und 26 teilen den jeweiligen Gangstellerzylinder 19, 20, 21 beziehungsweise 22 in eine erste Druckkammer 27, 28, 29 beziehungsweise 30 sowie eine zweite Druckkammer 31, 32, 33 beziehungsweise 34 auf. Je nach Stellung des jeweiligen Gangstellerventils 15, 16, 17 beziehungsweise 18 wird nun die erste Druckkammer 27, 28, 29 beziehungsweise 30 oder die zweite Druckkammer 31, 32, 33 beziehungsweise 34 mit dem in der gemeinsamen Zuleitung 12 vorliegenden Druck beaufschlagt. Die jeweils andere Druckkammer ist dann bevorzugt mit einem Ablauf 35, 36, 37 beziehungsweise 38 strömungsverbunden. In einer Neutralstellung des Gangstellerventils 15, 16, 17 beziehungsweise 18 ist dagegen keine der Druckkammern 27 und 31, 28 und 32, 29 und 33 beziehungsweise 30 und 34 mit der Zuleitung 12 strömungsverbunden. Vielmehr kann es vorgesehen sein, dass sie beide mit dem jeweiligen Ablauf 35, 36, 37 beziehungsweise 38 und entsprechend miteinander in Strömungsverbindung stehen.

Jedes der Gangstellerventile 15, 16, 17 und 18 weist nun ein Federelement 39, 40, 41 beziehungsweise 42 auf, welches es in Richtung einer seiner beiden Schaltstellungen drängt, beispielsweise in die erste Schaltstellung, in welcher die erste Druckkammer 27, 28, 29 beziehungsweise 30 mit der Zuleitung 12 strömungsverbunden ist. Analog dazu verfügt das Schaltventil 13 über ein Federelement 43, welches es in Richtung seiner zweiten Betriebsstellung drängt, in welcher die Strömungsverbindung zwischen der Zuleitung 12 und der Druckquelle 6 beziehungsweise dem Drucktank 9 unterbrochen ist. Jedes der Ventile verfügt nun über eine Stelleinrichtung 44, 45, 46, 47 beziehungsweise 48, mittels welcher eine Stellkraft erzeugt werden kann, welche der mithilfe des Federelements 39, 40, 41, 42 beziehungsweise 43 erzeugten Rückstellkraft entgegengewirkt und entsprechend die gewünschte Stellung des jeweiligen Ventils 13, 15, 16, 17 beziehungsweise 18 eingestellt werden kann.

Bei einer derartigen Getriebeeinrichtung 1 müssen die Ventile 13, 15, 16, 17 und 18 permanent bestromt werden, um die erste Betriebsstellung beziehungsweise die jeweilige Neutralstellung einzunehmen. Liegen sowohl die erste Betriebsstellung als auch alle Neutralstellungen vor, so befindet sich die Getriebeeinrichtung 1 in einer Bereitschaftsbetriebsart. Durch das permanent notwendige Bestromen der Ventile 13, 15, 16, 17 und 18 liegt jedoch ein hoher Energieverbrauch vor. Aus diesem Grund soll, falls möglich, aus der Bereitschaftsbetriebsart in eine Stromsparbetriebsart gewechselt werden, in welcher zumindest ein Teil der Ventile 13, 15, 16, 17, 18, bevorzugt alle Ventil 13, 15, 16, 17 und 18, stromlos geschaltet sind.

Weil jedoch die Federelemente 39, 40, 41 und 42 die Gangstellerventile 15, 16, 17 und 18 jeweils aus der Neutralstellung heraus in eine ihrer Schaltstellungen drängen, muss zuvor sichergestellt werden, dass das Schaltventil 13 tatsächlich in seiner zweiten Betriebsstellung vorliegt, die Strömungsverbindung zwischen der Druckquelle 6 beziehungsweise dem Drucktank 9 und der Zuleitung 12 also tatsächlich unterbrochen ist. Zu diesem Zweck werden zunächst alle Gangstellerventile 15, 16, 17 und 18 zum Einstellen ihrer jeweiligen Neutralstellung angesteuert. Nach einer bestimmten Wartezeit, mit welcher sichergestellt werden soll, dass tatsächlich alle Gangstellerventile 15, 16, 17 und 18 in ihrer Neutralstellung vorliegen, wird nun das Schaltventil 13 zum Einstellen der zweiten Betriebsstellung angesteuert. Auch hier wird nachfolgend eine bestimmte Wartezeit abgewartet.

Anschließend wird wenigstens eines der Gangstellerventile 15, 16, 17 und 18 derart angesteuert, dass es in eine seiner Schaltstellungen gelangt. Besonders bevorzugt wird dies durchgeführt, indem das jeweilige Gangstellerventil 15, 16, 17 beziehungsweise 18 stromlos geschaltet wird, sodass die Rückstellkraft das Einstellen in die jeweilige Schaltposition bewirkt.

Mittels einer hier nicht dargestellten Erfassungseinrichtung wird die Position des dem verwendeten Gangstellerventils 15, 16, 17 beziehungsweise 18 zugeordneten Gangstellerkolbens 23, 24, 25 und 26 über einen bestimmten Zeitraum hinweg überwacht. Wird innerhalb dieses Zeitraums eine Veränderung der Position festgestellt, so wird auf einen Fehler des Schaltventils 13 erkannt und bevorzugt der Wechsel in die Stromsparbetriebsart nicht durchgeführt beziehungsweise abgebrochen. Auf diese Art und Weise kann sichergestellt werden, dass kein Verblocken der Getriebeeinrichtung 1 auftritt, welche unter Umständen zu einer Beschädigung führen kann.

### BEZUGSZEICHENLISTE

- 1: Getriebeeinrichtung
- 2: Gangsteller
- 3: Gangsteller
- 4: Gangsteller
- 5: Gangsteller
- 6: Druckquelle
- 7: Elektromotor
- 8: Tank
- 9: Drucktank
- 10: Filter
- 11: Rückschlagventil
- 12: Zuleitung
- 13: Schaltventil
- 14: Filter
- 15: Gangstellerventil
- 16: Gangstellerventil
- 17: Gangstellerventil
- 18: Gangstellerventil
- 19: Gangstellerzylinder
- 20: Gangstellerzylinder
- 21: Gangstellerzylinder
- 22: Gangstellerzylinder
- 23: Gangstellerkolben
- 24: Gangstellerkolben
- 25: Gangstellerkolben
- 26: Gangstellerkolben
- 27: 1. Druckkammer
- 28: 1. Druckkammer
- 29: 1. Druckkammer
- 30: 1. Druckkammer
- 31: 2. Druckkammer
- 32: 2. Druckkammer
- 33: 2. Druckkammer
- 34: 2. Druckkammer
- 35: Ablauf
- 36: Ablauf
- 37: Ablauf
- 38: Ablauf
- 39: Federelement
- 40: Federelement
- 41: Federelement
- 42: Federelement
- 43: Federelement
- 44: Stelleinrichtung
- 45: Stelleinrichtung
- 46: Stelleinrichtung
- 47: Stelleinrichtung
- 48: Stelleinrichtung

## Patentansprüche

1. Verfahren zum Betreiben einer Getriebeeinrichtung (1), insbesondere einer Doppelkupplungsgetriebeeinrichtung, wobei die Getriebeeinrichtung (1) mehrere Gangsteller (2,3,4,5) mit jeweils einem Gangstellerventil (15,16,17,18) und einem mit einer Schaltgabel der Getriebeeinrichtung (1) wirkverbundenen Gangstellerkolben (23,24,25,26) aufweist, der in einem Gangstellerzylinder (19,20,21,22) angeordnet ist und diesen in eine erste Druckkammer (27,28,29,30) und eine zweite Druckkammer (31,32,33,34) aufteilt, wobei in einer ersten Schaltstellung des Gangstellerventils (15,16,17,18) die erste Druckkammer (27,28,29,30), in einer zweiten Schaltstellung die zweite Druckkammer (31,32,33,34) und in einer Neutralstellung keine der Druckkammern (27,31;28,32;29,33;30,34) mit einer gemeinsamen Zuleitung (12) strömungsverbunden ist, und wobei eine Strömungsverbindung der Zuleitung (12) zu einer gemeinsamen Druckquelle (6) in einer ersten Betriebsstellung eines Schaltventils (13) freigegeben und in einer zweiten Betriebsstellung des Schaltventils (13) unterbrochen ist, **dadurch gekennzeichnet, dass** für ein Wechseln aus einer Bereitschaftsbetriebsart in eine Stromsparbetriebsart ein Drucktest durchgeführt wird, bei dem die Gangstellerventile (15,16,17,18) der Gangsteller (2,3,4,5) zum Einstellen der Neutralstellung sowie das Schaltventil (13) zum Einstellen der zweiten Betriebsstellung angesteuert werden und anschließend das Gangstellerventil (15,16,17,18) wenigstens eines der Gangsteller (2,3,4,5) zum Einstellen einer der Schaltstellungen angesteuert wird, wobei die Position des Gangstellerkolbens (23,24,25,26) des entsprechenden Gangstellers (2,3,4,5) mittels einer Erfassungseinrichtung über einen bestimmten Zeitraum ermittelt und bei einer Veränderung der Position während des Zeitraums auf einen Fehler des Schaltventils (13) erkannt wird.

2. Verfahren nach Anspruch 1, **dadurch gekennzeichnet, dass** die Gangstellerventile (15,16,17,18) ständig mit einer in Richtung einer der Schaltstellungen gerichteten Rückstellkraft beaufschlagt werden und/oder dass das Schaltventil (13) ständig mit einer in Richtung der zweiten Betriebsstellung gerichteten Rückstellkraft beaufschlagt wird.

3. Verfahren nach einem der vorhergehenden Ansprüche, **dadurch gekennzeichnet, dass** ein Wechseln aus der Bereitschaftsbetriebsart in die Stromsparbetriebsart eingeleitet wird, wenn die Gangstellerventile (15,16,17,18) über einen bestimmten Zeitraum in ihrer Neutralstellung vorliegen.

4. Verfahren nach einem der vorhergehenden Ansprüche, **dadurch gekennzeichnet, dass** zum Ansteuern des Gangstellerventils (15,16,17,18) wenigstens eines der Gangsteller (2,3,4,5) zum Einstellen einer der Schaltstellungen das Gangstellerventil (15,16,17,18) stromlos geschaltet wird.

5. Verfahren nach einem der vorhergehenden Ansprüche, **dadurch gekennzeichnet, dass** aus der Bereitschaftsbetriebsart in die Stromsparbetriebesart gewechselt wird, wenn während des Zeitraums keine Veränderung der Position festgestellt wird.

6. Verfahren nach einem der vorhergehenden Ansprüche, **dadurch gekennzeichnet, dass** für ein Wechseln aus der Stromsparbetriebsart in die Bereitschaftsbetriebsart die Gangstellerventile (15,16,17,18) zum Einstellen der Neutralstellung angesteuert werden und nach einer bestimmten Wartezeit das Schaltventil (13) zum Einstellen der ersten Betriebsstellung angesteuert wird.

7. Verfahren nach einem der vorhergehenden Ansprüche, **dadurch gekennzeichnet, dass** den Gangstellerkolben (23,24,25,26) jeweils eine Haltevorrichtung zugeordnet ist, die den entsprechenden Gangstellerkolben (23,24,25,26) mit einer bestimmten Haltekraft in seine momentane Stellung drängt.

8. Verfahren nach einem der vorhergehenden Ansprüche, **dadurch gekennzeichnet, dass** während des Drucktests das Gangstellerventil (15,16,17,18) desjenigen Gangstellers (2,3,4,5) zum Einstellen einer der Schaltstellungen angesteuert wird, der nicht dem momentanen Fahrgang zugeordnet ist.

9. Verfahren nach einem der vorhergehenden Ansprüche, **dadurch gekennzeichnet, dass** das Doppelkupplungsgetriebe über zwei Getriebestränge verfügt, welchen jeweils eine Kupplung zugeordnet ist, wobei die Kupplung des Getriebestrangs, welchem der momentane Fahrgang nicht zugeordnet ist, geöffnet wird, und wobei während des Drucktests das Gangstellerventil (15,16,17,18) wenigstens eines diesem Getriebestrang zugeordneten Gangstellers (2,3,4,5) zum Einstellen einer der Schaltstellungen angesteuert wird.

10. Getriebeeinrichtung (1), insbesondere zur Durchführung des Verfahrens nach einem oder mehreren der vorhergehenden Ansprüche, die mehrere Gangsteller (2,3,4,5) mit jeweils einem Gangstellerventil (15,16,17,18) und einem mit einer Schaltgabel der Getriebeeinrichtung (1) wirkverbundenen Gangstellerkolben (23,24,25,26) aufweist, der in einem Gangstellerzylinder (19,20,21,22) angeordnet ist und diesen in eine erste Druckkammer (27,28,29,30) und eine zweite Druckkammer (31,32,33,34) aufteilt, wobei in einer ersten Schaltstellung des Gangstellerventils (15,16,17,18) die erste Druckkammer (27,28,29,30), in einer zweiten Schaltstellung die zweite Druckkammer (31,32,33,34) und in einer Neutralstellung keine der Druckkammern (27,31;28,32;29,33;30,34) mit einer gemeinsamen Zuleitung (12) strömungsverbunden ist, und wobei eine Strömungsverbindung der Zuleitung (12) zu einer gemeinsamen Druckquelle (6) in einer ersten Betriebsstellung eines Schaltventils (13) freigegeben und in einer zweiten Betriebsstellung des Schaltventils (13) unterbrochen ist, **dadurch gekennzeichnet, dass** die Getriebeeinrichtung (1) dazu ausgebildet ist, für ein Wechseln aus einer Bereitschaftsbetriebsart in eine Stromsparbetriebsart einen Drucktest durchzuführen, bei dem die Gangstellerventile (15,16,17,18) der Gangsteller (2,3,4,5) zum Einstellen der Neutralstellung sowie das Schaltventil (13) zum Einstellen der zweiten Betriebsstellung angesteuert werden und anschließend das Gangsteuerventil (15,16,17,18) wenigstens eines der Gangsteller (2,3,4,5) zum Einstellen einer der Schaltstellungen angesteuert wird, wobei die Position des Gangstellerkolbens (23,24,25,26) des entsprechenden Gangstellers (2,3,4,5) mittels einer Erfassungseinrichtung über einen bestimmten Zeitraum ermittelt und bei einer Veränderung der Position während des Zeitraums auf einen Fehler des Schaltventils (13) erkannt wird.

## Claims

1. Method for operating a transmission device (1), in particular a dual-clutch transmission device, wherein the transmission device (1) has a plurality of gear selectors (2, 3, 4, 5), each having a gear selector valve (15, 16, 17, 18) and a gear selector piston (23, 24, 25, 26) which is operatively connected to a shifting fork of the transmission device (1), and which is arranged in a gear selector cylinder (19, 20, 21, 22) and divides the latter into a first pressure chamber (27, 28, 29, 30) and a second pressure chamber (31, 32, 33, 34), wherein in a first shift position of the gear selector valve (15, 16, 17, 18), the first pressure chamber (27, 28, 29, 30), in a second shift position, the second pressure chamber (31, 32, 33, 34), and in a neutral position, none of the pressure chambers (27, 31; 28, 32; 29, 33; 30, 34) has a flow connection to the common feed line (12), and wherein a flow connection of the feed line (12) to a common pressure source (6) is cleared in a first operating position of a shifting valve (13) and is cut in a second operating position of the shifting valve (13), **characterised in that** a pressure test is executed when switching from a standby mode to a power saving mode, during which pressure test the gear selector valves (15, 16, 17, 18) of the gear selectors (2, 3, 4 ,5) are activated to assume a neutral position and the shifting valve (13) is activated to assume the second operating position, and subsequently the gear selector valve (15, 16, 17, 18) of at least one of the gear selectors (2, 3, 4, 5) is activated to assume one of the shift positions, wherein the position of the gear selector piston (23, 24, 25, 26) of the respective gear selector (2, 3, 4, 5) is determined by means of a detection device over a specific time period and a malfunction of the shifting valve (13) is recognised when the position changes during the time period.

2. Method according to claim 1, **characterised in that** the gear selector valves (15, 16, 17, 18) are continuously subjected to a restoring force directed in the direction of one of the shift positions and/or the shifting valve (13) is continuously subjected to a restoring force directed in the direction of the second operating position.

3. Method according to any one of the preceding claims, **characterised in that** a switch from the standby mode to the power saving mode is initiated, when the gear selector valves (15, 16, 17, 18) assume their neutral position over a specific time period.

4. Method according to any one of the preceding claims, **characterised in that** the gear selector valve (15, 16, 17, 18) is de-energised to activate the gear selector valve (15, 16, 17, 18) of at least one of the gear selectors (2, 3, 4, 5) to assume one of the shift positions.

5. Method according to any one of the preceding claims, **characterised in that** a switch from the standby mode to the power saving mode is implemented, when no change in the position is determined during the time period.

6. Method according to any one of the preceding claims, **characterised in that** to achieve a switch from the power saving mode to the standby mode, the gear selector valves (15, 16, 17, 18) are activated to assume the neutral position and the shifting valve (13) is activated to assume the first operating position after a specific waiting period has elapsed.

7. Method according to any one of the preceding claims, **characterised in that** a holding device is assigned to each of the gear selector pistons (23, 24, 25, 26) which urges the respective gear selector piston (23, 24, 25, 26) into its current position using a specific holding force.

8. Method according to any one of the preceding claims, **characterised in that** during the pressure test the gear selector valve (15, 16, 17, 18) of the one gear selector (2, 3, 4, 5), which is not assigned to the current driving gear, is activated to assume one of the shift positions.

9. Method according to any one of the preceding claims, **characterised in that** the dual-clutch transmission has two transmission trains which are each assigned to a clutch, wherein the clutch of the transmission train which is not assigned to the current driving gear is opened, and wherein during the pressure test, the gear selector valve (15, 16, 17, 18) of at least one gear selector (2, 3, 4, 5) assigned to said transmission train is activated to assume one of the shift positions.

10. Transmission device (1), in particular for executing the method according to one or more of the preceding claims, comprising a plurality of gear selectors (2, 3, 4, 5) each having a gear selector valve (15, 16, 17, 18) and a gear selector piston (23, 24, 25, 26) operatively connected to a shifting fork of the transmission device (1) and which is arranged in a gear selector cylinder (19, 20, 21, 22) and divides the latter into a first pressure chamber (27, 28, 29, 30) and a second pressure chamber (31, 32, 33, 34), wherein in a first shift position of the gear selector valve (15, 16, 17, 18), the first pressure chamber (27, 28, 29, 30), in a second shift position, the second pressure chamber (31, 32, 33, 34), and in a neutral position, none of the pressure chambers (27, 31; 28, 32; 29, 33; 30, 34) has a flow connection to the common feed line (12), and wherein a flow connection of the feed line (12) to a common pressure source (6) is cleared in a first operating position of a shifting valve (13) and is cut in a second operating position of the shifting valve (13), **characterised in that** the transmission device (1) is configured to execute a pressure test when switching from a standby mode to a power saving mode, during which pressure test the gear selector valves (15, 16, 17, 18) of the gear selectors (2, 3, 4 ,5) are activated to assume a neutral position and the shifting valve (13) is activated to assume the second operating position, and subsequently the gear selector valve (15, 16, 17, 18) of at least one of the gear selectors (2, 3, 4, 5) is activated to assume one of the shift positions, wherein the position of the gear selector piston (23, 24, 25, 26) of the respective gear selector (2, 3, 4, 5) is determined by means of a detection device over a specific time period and a malfunction of the shifting valve (13) is recognised when the position changes during the time period.

## Revendications

1. Procédé pour faire fonctionner une boîte de vitesses (1), en particulier une boîte de vitesses à double embrayage, laquelle boîte de vitesses (1) comporte plusieurs sélecteurs de vitesse (2, 3, 4, 5) avec à chaque fois une vanne de sélecteur de vitesse (15, 16, 17, 18) et un piston de sélecteur de vitesse (23, 24, 25, 26) en liaison active avec une fourchette de la boîte de vitesses (1), lequel piston de sélecteur de vitesse est agencé dans un cylindre de sélecteur de vitesse (19, 20, 21, 22) et divise celui-ci en une première chambre de compression (27, 28, 29, 30) et une deuxième chambre de compression (31, 32, 33, 34), la première chambre de compression (27, 28, 29, 30) étant reliée au niveau de la circulation du fluide à une conduite d'alimentation commune (12) lorsque la vanne de sélecteur de vitesse (15, 16, 17, 18) est dans une première position commutée, la deuxième chambre de compression (31, 32, 33, 34) étant reliée au niveau de la circulation du fluide à ladite conduite d'alimentation commune lorsque la vanne de sélecteur de vitesse est dans une deuxième position commutée et aucune des chambres de compression (27, 31; 28, 32; 29, 33; 30, 34) n'étant reliée au niveau de la circulation du fluide à ladite conduite d'alimentation commune lorsque la vanne de sélecteur de vitesse est dans une position neutre, et une liaison au niveau des fluides qui va de la conduite d'alimentation (12) à une source de pression commune (6) étant autorisée dans une première position de fonctionnement d'une vanne de commutation (13) et étant interrompue dans une deuxième position de fonctionnement de la vanne de commutation (13), **caractérisé en ce que**, en vue d'un passage d'un mode de fonctionnement de disponibilité à un mode de fonctionnement d'économie d'énergie, on effectue un test de pression lors duquel les vannes de sélecteur de vitesse (15, 16, 17, 18) des sélecteurs de vitesse (2, 3, 4, 5) sont commandées pour passer dans la position neutre et la vanne de commutation (13) est commandée pour passer dans la deuxième position de fonctionnement puis la vanne de sélecteur de vitesse (15, 16, 17, 18) d'au moins un des sélecteurs de vitesse (2, 3, 4, 5) est commandée pour passer dans l'une des positions commutées, la position du piston de sélecteur de vitesse (23, 24, 25, 26) du sélecteur de vitesse (2, 3, 4, 5) correspondant étant détectée au moyen d'un dispositif de détection pendant un certain intervalle de temps et une défaillance de la vanne de commutation (13) étant détectée en présence d'un changement de la position pendant l'intervalle de temps.

2. Procédé selon la revendication 1, **caractérisé en ce que** les vannes de sélecteur de vitesse (15, 16, 17, 18) sont constamment soumises à une force de rappel orientée dans la direction d'une des positions commutées et/ou **en ce que** la vanne de commutation (13) est constamment soumise à une force de rappel orientée dans la direction de la deuxième position de fonctionnement.

3. Procédé selon l'une des revendications précédentes, **caractérisé en ce qu'**un passage du mode de fonctionnement de disponibilité au mode de fonctionnement d'économie d'énergie est déclenché lorsque les vannes de sélecteur de vitesse (15, 16, 17, 18) se trouvent dans leur position neutre au-delà d'un certain intervalle de temps.

4. Procédé selon l'une des revendications précédentes, **caractérisé en ce que**, pour commander les vannes de sélecteur de vitesse (15, 16, 17, 18) d'au moins un des sélecteurs de vitesse (2, 3, 4, 5) afin de passer dans l'une des positions commutées, la vanne de sélecteur de vitesse (15, 16, 17, 18) est mise hors courant.

5. Procédé selon l'une des revendications précédentes, **caractérisé en ce que** l'on passe du mode de fonctionnement de disponibilité au mode de fonctionnement d'économie d'énergie lorsqu'aucun changement de la position n'a été constaté pendant l'intervalle de temps.

6. Procédé selon l'une des revendications précédentes, **caractérisé en ce que**, pour un passage du mode de fonctionnement d'économie d'énergie au mode de fonctionnement de disponibilité, les vannes de sélecteur de vitesse (15, 16, 17, 18) sont commandées pour passer dans la position neutre et, après un certain temps d'attente, la vanne de commutation (13) est commandée pour passer dans la première position de fonctionnement.

7. Procédé selon l'une des revendications précédentes, **caractérisé en ce qu'**il est associé aux pistons de sélecteur de vitesse (23, 24, 25, 26) à chaque fois un dispositif de maintien qui pousse le piston de sélecteur de vitesse (23, 24, 25, 26) correspondant avec une certaine force de maintien dans sa position momentanée.

8. Procédé selon l'une des revendications précédentes, **caractérisé en ce que**, pendant le test de pression, la vanne de sélecteur de vitesse (15, 16, 17, 18) qui est commandée pour passer dans l'une des positions commutées est celle du sélecteur de vitesse (2, 3, 4, 5) qui n'est pas associé au rapport de transmission momentané.

9. Procédé selon l'une des revendications précédentes, **caractérisé en ce que** la boîte de vitesses à double embrayage dispose de deux trajets de transmission auxquels est associé à chaque fois un embrayage, l'embrayage du trajet de transmission qui est ouvert étant celui auquel n'est pas associé le rapport de transmission momentané et, pendant le test de pression, la vanne de sélecteur de vitesse (15, 16, 17, 18) d'au moins un sélecteur de vitesse (2, 3, 4, 5) associé à ce trajet de transmission étant commandée pour passer dans l'une des positions commutées.

10. Boîte de vitesses (1), en particulier pour la mise en oeuvre du procédé selon l'une ou plusieurs des revendications précédentes, qui comporte plusieurs sélecteurs de vitesse (2, 3, 4, 5) avec à chaque fois une vanne de sélecteur de vitesse (15, 16, 17, 18) et un piston de sélecteur de vitesse (23, 24, 25, 26) en liaison active avec une fourchette de la boîte de vitesses (1), lequel piston de sélecteur de vitesse est agencé dans un cylindre de sélecteur de vitesse (19, 20, 21, 22) et divise celui-ci en une première chambre de compression (27, 28, 29, 30) et une deuxième chambre de compression (31, 32, 33, 34), la première chambre de compression (27, 28, 29, 30) étant reliée au niveau de la circulation du fluide à une conduite d'alimentation commune (12) lorsque la vanne de sélecteur de vitesse (15, 16, 17, 18) est dans une première position commutée, la deuxième chambre de compression (31, 32, 33, 34) étant reliée au niveau de la circulation du fluide à ladite conduite d'alimentation commune lorsque la vanne de sélecteur de vitesse est dans une deuxième position commutée et aucune des chambres de compression (27, 31; 28, 32; 29, 33; 30, 34) n'étant reliée au niveau de la circulation du fluide à ladite conduite d'alimentation commune lorsque la vanne de sélecteur de vitesse est dans une position neutre, et une liaison au niveau des fluides qui va de la conduite d'alimentation (12) à une source de pression commune (6) étant autorisée dans une première position de fonctionnement d'une vanne de commutation (13) et étant interrompue dans une deuxième position de fonctionnement de la vanne de commutation (13), **caractérisé en ce que** la boîte de vitesses (1) est conçue pour, en vue d'un passage d'un mode de fonctionnement de disponibilité à un mode de fonctionnement d'économie d'énergie, effectuer un test de pression lors duquel les vannes de sélecteur de vitesse (15, 16, 17, 18) des sélecteurs de vitesse (2, 3, 4, 5) sont commandées pour passer dans la position neutre et la vanne de commutation (13) est commandée pour passer dans la deuxième position de fonctionnement puis la vanne de sélecteur de vitesse (15, 16, 17,18) d'au moins un des sélecteurs de vitesse (2, 3, 4, 5) est commandée pour passer dans l'une des positions commutées, la position du piston de sélecteur de vitesse (23, 24, 25, 26) du sélecteur de vitesse (2, 3, 4, 5) correspondant étant détectée au moyen d'un dispositif de détection pendant un certain intervalle de temps et une défaillance de la vanne de commutation (13) étant détectée en présence d'un changement de la position pendant l'intervalle de temps.
